# EUROPÄISCHE PATENTANMELDUNG

(11) **EP 4 541 765 A2**
(43) Veröffentlichungstag der Anmeldung: **23.04.2025**
(21) Anmeldenummer: 24207396.3
(22) Anmeldetag: 18.10.2024
(51) Int. Cl.: C01B 32/00

(54) **SCHWEFEL-KOHLENSTOFFAEROGEL-KOMPOSITE MITTELS VAKUUM-COATING**

(30) Priorität: 18.10.2023 DE 102023128578
(71) Anmelder: Deutsches Zentrum für Luft- und Raumfahrt e.V., 53227 Bonn (DE)
(72) Erfinder: Schwan, Marina, 51377 Leverkusen (DE); Kröner, Jessica, 53639 Königswinter (DE); Milow, Barbara, 51147 Köln (DE); Milow, Ida, 51147 Köln (DE)
(74) Vertreter: dompatent von Kreisler Selting Werner - Partnerschaft von Patent- und Rechtsanwälten mbB

(57) **Zusammenfassung**

Gegenstand der Erfindung ist ein Verfahren zur Herstellung von einem Schwefel-Kohlenstoff-Komposit, in dem Schwefel mit Kohlenstoff kovalent gebunden durch Reaktion von elementarem Schwefel und Kohlenstoffaerogel in einem Vakuum-Coater ist, sowie ein entsprechendes Komposit.

## Beschreibung

Gegenstand der Erfindung ist ein Verfahren zur Herstellung eines Schwefel-Kohlenstoffaerogel-Komposits, in dem elementarer Schwefel insbesondere in einem Vakuum-Coater durch Reaktion mit Kohlenstoffaerogel kovalent gebunden wird, sowie ein entsprechendes Komposit.

In einer Kohlenstoffmatrix eingelagerter Schwefel ist bei Entfernung von giftigem Quecksilber aus Wasser, sowie in Metall-Schwefelbatterien von großer Bedeutung. In beiden Anwendungen dient Schwefel als Aktiv-Material in Form eines Schwefel-Kohlenstoff-Komposits. In der Metall-Schwefelbatterie ist Schwefel ein elektrochemisch aktives Material.

Die Herstellung von entsprechenden Kompositen, oft Infiltration oder Imprägnierung genannt, findet in der Regel bei 400 °C bis 600 °C statt und dauert etwa zwei bis sechs Stunden. Dabei kann der Gesamtprozess mit Heiz- und Kühlphasen über zehn Stunden dauern und ist somit sehr zeit- und energieintensiv. Die wichtigsten Nachteile der Herstellung von Schwefel-Kohlenstoff-Kompositen durch Gasinfiltration sind die lange Dauer und der hohe Energieverbrauch.

So beschreibt beispielsweise US 2014/0186695 A1 ein Verfahren, bei dem ein Schwefel-Kohlenstoff-Komposit hergestellt wird, welches bei mindestens 445 bis 1000 °C für eine bestimmte Zeit unter einem Druck von mehr als 1 bar behandelt wird, sodass durch Schwefelgase ein infiltriertes Kohlenstoffmaterial entsteht.

US 2015/0155549 A1 betrifft ein Verfahren zur Herstellung eines Schwefel-Kohlenstoff-Komposits durch Reaktion von elementarem Schwefel und einem porösen Kohlenstoffmaterial. Die Druckschrift beschreibt eine Funktionalisierung der Kohlenstoffmaterialien, in welchen Schwefel aufgrund einer hohen Affinität zu Polysulfiden gebunden werden kann. Hier wird ein besonderes Konzept zur Unterdrückung vom Polysulfid-Shuttles vorgeschlagen. Dieses Verfahren erfordert zusätzliche Schritte in der Synthese wie Aktivierung oder Oxidierung, Funktionalisierung, Waschen und Trocknen.

Wie bereits oben erwähnt, haben die im Stand der Technik beschriebenen Verfahren zur Herstellung eines Schwefel- Kohlenstoff-Komposits erhebliche Nachteile, wie beispielsweise ihre Energieintensivität und ihren Zeitaufwand. Somit gibt es einen Bedarf nach einem neuen Verfahren, welcher die Entwicklung oder die Herstellung von Schwefel-Kohlenstoff-Kompositen, insbesondere Schwefel-Kohlenstoffaerogel-Kompositen vereinfacht.

Aufgabe der vorliegenden Erfindung ist es, die Herstellung von Schwefel-Kohlenstoffaerogel-Komposite zu optimieren, insbesondere den Materialdurchsatz deutlich zu erhöhen und gleichzeitig die Dauer und den Energieverbrauch zu reduzieren.

Die Erfindung betrifft ein quasi-kontinuierliches Verfahren zur Herstellung eines Schwefel-Kohlenstoffaerogel-Komposits, in dem der Schwefel in die Mikro- und/oder Mesoporen des Kohlenstoffaerogels eingebunden werden. Es wurde festgestellt, dass bei Nutzung eines Vakuum-Coaters zur Herstellung des Schwefel-Kohlenstoffaerogel-Komposits die Reaktionszeit sowie der Energieverbrauch erheblich reduziert werden kann. Dies wird erreicht in dem man in dem Vakuum-Coater die Materialien, also Schwefel und Kohlenstoffaerogel, miteinander im Vakuum vermischt und erhitzt. Durch Entfernen des Vakuums wird der geschmolzene Schwefel in den Poren des Kohlenstoffaerogels aufgenommen.

In einer ersten Ausführungsform wird die der vorliegenden Erfindung zugrunde liegende Aufgabe gelöst durch ein Verfahren zur Herstellung eines Schwefel-Kohlenstoffaerogel-Komposits mit mindestens einer kovalenten Bindung zwischen Schwefel und dem amorphen Kohlenstoff, das dadurch gekennzeichnet ist, dass man elementaren Schwefel und ein amorphes Kohlenstoffaerogel bei gegenüber Umgebungsdruck vermindertem Druck und bei gegenüber Raumtemperatur erhöhten Temperatur miteinander in Kontakt bringt, anschließend belüftet und abkühlt, wobei das in Kontakt bringen im Verlauf von 2 Minuten bis 8 Stunden, insbesondere von 3 Minuten bis 6 Stunden, durchgeführt wird.

Es hat sich gezeigt, dass man bei Vermischen von elementarem Schwefel und amorphem Kohlenstoffaerogel bei vermindertem Druck gegenüber Umgebungsdruck und erhöhter Temperatur gegenüber Raumtemperatur die Reaktionszeit und der Energieverbrauch zur Herstellung eines Schwefel-Kohlenstoffaerogel-Komposits wesentlich reduzieren lässt. Dabei wurde auch festgestellt, dass sich überaschenderweise kovalente Bindungen zwischen Schwefel und Kohlenstoffatomen ausbilden. Überaschenderweise kann mit dem erfindungsgemäßen Verfahren ein erfindungsgemäßes Schwefel-Kohlenstoffaerogel-Komposit in kurzer Zeit bereitgestellt werden. Herkömmliche im Stand der Technik bekannte Verfahren benötigen eine Verfahrensdauer von mindestens 15 Stunden, wohingegen das erfindungsgemäße Verfahren bereits in einer Zeit von 2 Minuten bis maximal 8 Stunden, je nach gewünschtem Komposit, erhalten werden kann.

Ferner lässt sich über das erfindungsgemäße Verfahren die Herstellung eines Schwefel-Kohlenstoffaerogel-Komposits quasi-kontinuierlich durchführen, was vorher mit den verwendeten Verfahren zur Gas- oder Schmelzinfiltration nicht möglich war. Außerdem wird in einer bevorzugten Ausführungsform das Vermischen und die thermische Behandlung zur Infiltration des Schwefels in einem Schritt durchgeführt. Durch das stetige Vermischen während des Prozesses lässt sich ein hoher Grad an Homogenität innerhalb von sehr kurzen Prozesszeiten bewerkstelligen, der bei vorherigen im Stand der Technik bekannten Verfahren nicht zu erreichen ist.

Bei dem erfindungsgemäßen Verfahren zur Herstellung eines Schwefel-Kohlenstoffaerogel-Komposits entsteht zwischen dem Schwefel und dem Kohlenstoff des amorphen Kohlenstoffaerogels mindestens eine kovalente Bindung. Unter kovalenter Bindung oder Atombindung versteht man eine chemische Bindungsart zwischen Nichtmetallen bei der sich die Atome die Elektrodenpaare teilen.

Der eingesetzte elementare Schwefel im erfindungsgemäßen Verfahren liegt bei Raumtemperatur als kronenförmiger Cyclooctaschwefel (o - Ss) vor. Bei 95,5 °C findet eine Umwandlung des orthorhombischen Schwefels (o - Ss) in monoklinen β-Schwefel statt, welcher bei ca. 119 °C schmilzt.

Im erfindungsgemäßen Verfahren wird ein amorphes Kohlenstoffaerogel eingesetzt. Unter amorphem Kohlenstoffaerogel wird ein poröses Material, welches aus einem im Sol-Gel-Prozess synthetisierten, organischen Aerogel hergestellt wird, verstanden. Dabei ist es ist es wichtig für das erfindungsgemäße Verfahren, dass ein offenporiges Material genutzt wird, damit der elementare Schwefel das Material infiltrieren kann.

Das erfindungsgemäße Verfahren wird ferner unter einem verminderten Druck gegenüber dem Umgebungsdruck durchgeführt. Unter Umgebungsdruck versteht man den hydrostatischen Druck, der an einem beliebigen Punkt der Erde herrscht. So wird unter Normbedingungen von einem Luftdruck von ca. 1013 mbar ausgegangen. Dementsprechend wird das erfindungsgemäße Verfahren bei einem verminderten Druck, also bei einem Druck kleiner als 1013 mbar, durchgeführt. Dieser kann sich allerdings je nach Standort entsprechend der Höhe, gemessen am Meeresspiegel als Nullpunkt, ändern.

Ferner wird das erfindungsgemäße Verfahren bei einer erhöhten Temperatur gegenüber Raumtemperatur durchgeführt. Unter Raumtemperatur versteht man unter Normbedingungen eine Temperatur zwischen 15 °C und 30 °C., insbesondere 19 °C bis 25 °C.

Im erfindungsgemäßen Verfahren versteht man unter Belüften beziehungsweise Belüftung, dass das Gemisch vom Vakuum beziehungsweise vom im Vergleich zum Umgebungsdruck verminderten Druck auf einen höheren Druck wieder eingestellt wird. So muss die Belüftung im Gefäß beziehungsweise des Rührers oder Reaktors für das erfindungsgemäße Verfahren nicht sofort auf Umgebungsdruck stattfinden, sondern kann stufenweise erfolgen. Durch das Belüften wird das offenporige Material mit dem Schwefel, welches entweder als Gas und/oder Flüssigkeit vorliegt, infiltriert beziehungsweise die Poren werden gefüllt. Überaschenderweise wurde festgestellt, dass sich dadurch kovalente Bindungen zwischen Kohlenstoff und Schwefel ausbilden und nicht wie erwartet eine einfache Oberflächenbeschichtung des Kohlenstoffmaterials stattgefunden hat.

Unter Abkühlung beziehungsweise Abkühlen versteht man die Beendigung des Erhitzens des Gemischs und die Abkühlung auf Raumtemperatur. Die Abkühlung kann passiv, also einfach nur durch Entfernen der Wärme, oder aktiv, beispielsweise durch eine Kühlung mittels Wärmetauscher, Luftstrom oder Kühlung des Reaktors, insbesondere des Vakuum-Coaters, geschehen.

In einer bevorzugten Ausführungsform des erfindungsgemäßen Verfahrens wird der elementare Schwefel und das amorphe Kohlenstoffaerogel miteinander bei gegenüber Umgebungsdruck verminderten Druck vermischt und anschließend erhitzt. Darunter versteht man, dass der elementare Schwefel und das amorphe Kohlenstoffaerogel zunächst vorgelegt werden, anschließend der Druck innerhalb des Gefäßes, oder des Reaktors, insbesondere des Vakuum-Coaters, vermindert wird und man anschließend die in miteinander Kontakt gebrachte Materialien vermischt und danach erhitzt.

Des Weiteren ist es in einer bevorzugten Ausführungsform des erfindungsgemäßen Verfahrens möglich, dass der elementare Schwefel separat erhitzt wird und anschließend bei gegenüber Umgebungsdruck vermindertem Druck mit dem ebenfalls erwärmten offenporigen, amorphen Kohlenstoffaerogel in Kontakt gebracht und vermischt werden. Dabei wird das amorphe Kohlenstoffaerogel zunächst im Gefäß, in dem die beiden Komponenten später gemischt werden, vorgelegt und erhitzt. In einem separaten Reaktor oder entsprechendem Gefäß wird der elementare Schwefel mindestens zur Flüssigkeit oder in die Gasphase gebracht, wobei die flüssige Form bevorzugt ist. Anschließend wird das amorphe Kohlenstoffaerogel unter verminderten Druck gegenüber dem Umgebungsdruck gebracht und der flüssige oder gasförmige Schwefel, optional bei gleichzeitiger Vermischung, hinzugegeben. Die Zugabe wie beispielsweise durch Aufsprühen, also die Einbringung von flüssigem und/oder gasförmigen Schwefel, sorgt für eine feine und homogene Schwefelverteilung im Kohlenstoffmaterial. Im Stand der Technik wurden bisher das amorphe Kohlenstoffaerogel und der Schwefel in Kontakt gebracht und anschließend erhitzt. Dadurch können Probleme bei der Homogenität entstehen. Dieses Problem kann insbesondere durch diese bevorzugte erfindungsgemäße Ausführungsform verhindert werden.

In einer weiteren Ausführungsform ist es möglich, dass man das amorphe Kohlenstoffaerogel bei gegenüber Umgebungsdruck vermindertem Druck erhitzt, oder nach dem Erhitzen des amorphen Kohlenstoffaerogels den Druck gegenüber dem Umgebungsdruck absenkt. Anschließend kann der geschmolzene Schwefel nach Temperatur hinzugegeben werden, wodurch das Aerogel mit dem elementaren Schwefel in Kontakt gebracht wird. In fester Form kann Schwefel nur vor dem Absenken des Druckes hinzugegeben werden. Durch dieses Vorgehen kann der Schwefel beim Belüften in die unter Vakuum stehenden Poren gezogen werden.

Somit sind in den beschriebenen bevorzugten Ausführungsformen die Schritte des Erhitzens, Vermischens und der Druckverminderung in der Reihenfolge austauschbar. Also ist es beispielsweise möglich, zunächst die Materialen zu vermischen, den Druck zu erniedrigen und dann zu erhitzen.

Wenn fester Schwefel eingesetzt wird, die Materialien zunächst vorgelegt werden müssen und die anderen Schritte wieder in beliebiger Reihenfolge durchgeführt werden können.

Somit wird das erfindungsgemäße Verfahren in einem Rührer- beziehungsweise in einem beheizbaren Reaktor mit einem Vermischungseinheit unter verminderten Druck gegenüber dem Umgebungsdruck. Solche Reaktoren werden beispielsweise in der Tiernahrungsindustrie genutzt, welche eine quasi-kontinuierliche Herstellung des Schwefel-Kohlenstoffaerogel-Komposits ermöglichen.

Somit kann in einer bevorzugten Ausführungsform das erfindungsgemäße Verfahren wie folgt zusammengefasst werden:
Ein Verfahren zur Herstellung eines Schwefel-Kohlenstoffaerogel-Komposits mit mindestens einer kovalenten Bindung zwischen Schwefel und amorphen Kohlenstoffaerogel, ist dadurch gekennzeichnet, dass
a)
   (i) amorpher Kohlenstoff in einem Reaktor optional unter Vakuum erhitzt wird;
   (ii) elementarer Schwefel bei Umgebungsdruck oder vermindertem Druck separat erhitzt wird;
   (iii) falls nicht unter (i) geschehen, der Reaktor evakuiert wird und
   (iv) der elementare Schwefel dem erhitzten Kohlenstoff hinzugegeben und das Gemisch unter Vakuum vermischt wird
      oder
b)
   (i) amorpher Kohlenstoff mit elementarem Schwefel in einem Reaktor vorgelegt wird;
   (ii) die vorgelegten Stoffe aus (i) unter Vakuum vermischt werden und
   (iii) das Gemisch aus (II) unter Vakuum erhitzt wird
      und
das Gemisch, welches aus a) oder b) erhalten wurde, belüftet und abgekühlt wird.

Ferner kann in einer bevorzugten Ausführungsform das erfindungsgemäße Verfahren bei einer Temperatur und einem Druck durchgeführt werden, bei der der elementare Schwefel flüssig oder gasförmig, vorzugsweise flüssig vorliegt. So kann, wenn das Schmelzen im Verfahren bei Umgebungsdruck durchgeführt wird, die Temperatur, um den Schwefel in die Schmelze zu bringen bei mindestens ca. 110 °C liegen. Wird das Verfahren in einem verminderten Druck im Vergleich zum Umgebungsdruck durchgeführt, so muss auch die Schmelztemperatur beziehungsweise Erhitzungstemperatur erhöht werden. Die Werte hierzu können aus der Fachliteratur anhand eines Phasendiagramms entnommen werden. Der Fachmann weiß somit genau, welche Drücke eingesetzt werden müssen beziehungsweise welche Temperaturen eingesetzt werden müssen je nachdem welche Temperatur oder man welchen Druck auswählt.

In einer weiteren bevorzugten Ausführungsform des erfindungsgemäßen Verfahrens kann der Schwefel zunächst in die Gasphase gebracht und anschließend mit dem Kohlenstoffaerogel in Kontakt gebracht werden. Außerdem ist es in einer bevorzugten Ausführungsform möglich, dass man das Kohlenstoffaerogel mit dem elementaren Schwefel zunächst in Kontakt bringt und das Gemisch so erhitzt, dass der Schwefel entweder flüssig, als Gas oder als Mischung vorliegt. Dabei kann der Druck so angepasst werden, sodass man stärker oder weniger erhitzen muss. Vorzugsweise wird allerdings das erfindungsgemäße Verfahren mit Schwefel in der Flüssigphase genutzt. Hierdurch spart man Energie und schafft trotzdem die erfindungsgemäße Ausbildung der kovalenten Bindung im Schwefel-Kohlenstoffaerogel-Komposit.

In einer weiteren bevorzugten Ausführungsform kann der flüssige Schwefel in dem Fachmann bekannterweise in den Reaktor eingebracht werden. Beispiele der Zufuhr sind die Dosierung über beheizte Leitungen, Tropfenzufuhr, eine Injektion unter Druck, eine Schwefel-Dampf-Injektion, die Verwendung eines Extruder- oder Schmelzzufuhrsystems, Aufsprühen einer Schwefellösung oder der Schmelze oder das Einführen einer Lösung.

In einer weiteren bevorzugten Ausführungsform des erfindungsgemäßen Verfahrens kann der gegenüber Umgebungsdruck erniedrigte Druck so ausgewählt werden, dass er 400 mbar oder weniger, insbesondere 100 mbar bis 200 mbar beträgt. Bei dieser bevorzugten Ausführungsform muss entsprechend der Temperatur, bei der das Verfahren durchgeführt wird, ausgewählt werden, wobei diese von 100 °C bis 200 °C, bevorzugt von 109 °C bis 185 °C, ganz besonders bevorzugt von 115 °C bis 170 °C beträgt. In einer weiteren bevorzugten Ausführungsform wird das Verfahren bei einer Temperatur von 120 °C bis 130 °C durchgeführt. Es ist überaschenderweise gelungen, durch das erfindungsgemäße Verfahren die Infiltrationstemperatur im Vergleich zu den im Stand der Technik offenbarten Verfahren wesentlich zu verringern.

In einer weiteren bevorzugten Ausführungsform kann das erfindungsgemäße Verfahren auch unter Sauerstoffausschluss und/oder unter Inertgas, wie beispielsweise Stickstoff oder Argon durchgeführt werden. Hierdurch ist es möglich ungewünschte Oxidationsprozesse mit Luftsauerstoff zu reduzieren beziehungsweise nahezu ohne diese Oxidationsprozesse mit Luftsauerstoff das Schwefel-Kohlenstoffaerogel-Komposit nach dem erfindungsgemäßen Verfahren herzustellen.

In einer weiteren bevorzugten Ausführungsform kann das Verfahren mindestens bei der Schmelztemperatur von Schwefel, vorzugsweise von 109 °C oder mehr, insbesondere von 120 °C bis 170 °C, ganz besonders von 120 °C bis 130 °C durchgeführt werden. Hierbei kann der Druck wieder so ausgewählt werden, dass entweder mehr oder weniger Energie eingesetzt werden muss, damit der elementare Schwefel zur Schmelze oder in die Gasphase gebracht werden kann. Falls in einer bevorzugten Ausführungsform des erfindungsgemäßen Verfahrens mit der Schwefelschmelze gearbeitet wird, muss dabei ebenfalls die Viskosität beachtet werden. Für das erfindungsgemäße Verfahren ist eine hohe Viskosität nachteilig, da sich sonst die Poren des amorphen Kohlenstoffaerogels beim Abkühlen schlechter infiltrieren beziehungsweise befüllen lassen.

In einer weiteren bevorzugten Ausführungsform ist das eingesetzte amorphe Kohlenstoffaerogel makro-, meso- und/oder mikroporig, besonders bevorzugt mikroporig. Die Auswahl des Porenvolumens beziehungsweise die Größe oder die Porosität hängt von der jeweiligen Anwendung des herzustellenden Schwefel-Kohlenstoffaerogel-Komposits ab.

So ist es im erfindungsgemäßen Verfahren möglich sowohl Mikro- und/oder Makro- und Mesoporen zu füllen. Wenn beispielsweise ein Kohlenstoffmaterial ausgewählt wird, welches sowohl Mikro-, Makro- und Mesoporen aufweist, so ist es möglich zunächst mit einem sehr geringen Druck im Vergleich zum Umgebungsdruck (also Δp= 800 bis 1000 mbar, wobei Δp die Differenz zwischen Umgebungsdruck und vermindertem Druck im Gefäß, welches für das erfindungsgemäße Verfahren genutzt wird, ist) zu arbeiten, wodurch zunächst die Mikroporen infiltriert werden. Anschließend kann man bei Bedarf mehr Schwefel hinzugeben und bei höherem Druck arbeiten (also Δp= 200 bis 500 mbar), sodass zunächst die Meso- und danach, wenn gewünscht noch die Makroporen gefüllt werden. Dementsprechend muss dann auch wieder der Druck, bei dem gearbeitet wird angepasst werden. Wenn allerdings mit der Gasphase des elementaren Schwefels gearbeitet wird, so kann die Befüllung der Mikro- oder der Makroporen mithilfe der Schwefelkonzentration kontrolliert werden. Bei einer geringen Schwefelkonzentration werden zunächst die Mikro- und anschließend die Makroporen gefüllt. Es ist auch möglich, dass in einem Kohlenstoff-Komposit beziehungsweise Kohlenstoffmaterial mit Mikro- und Makroporen nur die Makroporen befüllt werden. Hierzu muss bei entsprechend wenig Druckabfall (also Δp= 50 bis 400 mbar) im Vergleich zum Umgebungsdruck gearbeitet werden. Im erfindungsgemäßen Verfahren ist es ebenfalls wichtig, die Schwefelmenge anzupassen. So wird anhand des Volumenanteils der zu befüllenden Poren die Schwefelmenge berechnet und dementsprechend eingesetzt. Falls zu viel Schwefel benutzt wird, so werden zusätzlich die äußeren Oberflächen belegt und nicht nur die Poren-Volumina ausgefüllt, welches nicht erwünscht ist. Die Infiltration beziehungsweise Befüllung der Poren findet dabei bei der entsprechenden Belüftung statt, wobei diese stufenweise erfolgen kann. So kann bei einer ersten Infiltration Δp= 800 bis 1000 mbar, bei einer zweiten Infiltration Δp= 300- 500 mbar und gegebenenfalls bei einer dritten Infiltration Δp= 100- 300 mbar betragen. Jeder dieser Schritte ist erfindungsgemäß als Belüftung zu verstehen, wobei der letzte Belüftungsschritt die Wiederherstellung des Umgebungsdrucks innerhalb des Gefäßes, in dem das erfindungsgemäße Verfahren durchgeführt wird, ist.

Das erfindungsgemäße Verfahren zeichnet sich dadurch aus, dass es im Verlauf von 2 Minuten bis 8 Stunden, insbesondere von 3 Minuten bis 6 Stunden, ganz besonders bevorzugt, von 5 Minuten bis 3 Stunden durchgeführt wird bzw. in Kontakt gebracht wird. Geringere Zeiten sind nicht sinnvoll, da die Infiltration nicht vollständig abgeschlossen ist. Dabei bezieht sich diese Zeitangabe auf den Gesamtprozess, also das Beladen, Mischen, Belüften und Entladen. Es konnte überaschenderweise festgestellt werden, dass in kurzer Zeit ein Schwefel-Kohlenstoffaerogel-Komposit hergestellt werden kann. Dadurch ist das Verfahren wirtschaftlich wesentlich vorteilhafter als andere, die im Stand der Technik bekannt sind.

In einer bevorzugten Ausführungsform wird das Mischen des erfindungsgemäßen Verfahrens im Verlauf von 2 Minuten, bevorzugt von 3 Minuten bis 60 Minuten, ganz besonders bevorzugt von 5 Minuten bis 40 Minuten, noch mehr bevorzugt 5 Minuten bis 20 Minuten durchgeführt. Mischen bedeutet dabei, dass die beiden Komponenten, also amorphes Kohlenstoffaerogel und elementarer Schwefel bei den entsprechenden Verfahrensparameter, wie Druck, Temperatur, Mischgeschwindigkeit, in Kontakt und in Bewegung gebracht wird. In diesem Sinne wird der Fachmann unter dem Mischen auch die Infiltrationszeit verstehen um das fertige Produkt, also ein Schwefel-Kohlenstoffaerogel-Komposit, zu erhalten.

Längere Misch bzw. Infiltrationszeiten sind nicht vorteilhaft.

Es konnte überraschenderweise festgestellt werden, dass das ständige Mischen die Infiltration erheblich verbessert, da die Oberfläche ständig erneuert wird. Entsprechend können kürzere Verfahrenszeiten, als im Stand der Technik bekannt ist, eingesetzt werden.

In einer weiteren bevorzugten Ausführungsform des erfindungsgemäßen Verfahrens kann das Verfahren quasi-kontinuierlich durchgeführt werden. Quasi-kontinuierlich bedeutet dabei, dass man die Materialien, die eingesetzt werden, also Schwefel und amorphes Kohlenstoffaerogel immer wieder kontinuierlich dazu geben kann, sodass das Verfahren einfach immer weiter betrieben werden kann.

Das Schwefel-Kohlenstoffaerogel-Komposit welches durch das erfindungsgemäße Verfahren erhalten werden kann, ist dadurch gekennzeichnet, dass es mindestens eine kovalente Bindung innerhalb der Schwefel- und Kohlenstoffüberbrückung aufweist. Dabei handelt es sich zwischen Kohlenstoff und Schwefel um eine Einfachbindung. Da Schwefel zwei freie ungepaarte Elektronen aufweist, kann er insgesamt maximal zwei Bindungen zu Kohlenstoff eingehen. Die restlichen Bindungsverhältnisse, also die zwischen den Kohlenstoffatomen, lassen sich durch C-C konjugierte Doppelbindungen charakterisieren. In einer bevorzugten Ausführungsform liegt mindestens 90 % des Kohlenstoffs in einer sp² Hybridisierung innerhalb des Schwefel-Kohlenstoff-Komposits vor.

Das aus dem erfindungsgemäßen Verfahren erhaltene Schwefel-Kohlenstoffaerogel-Komposit ist ferner dadurch gekennzeichnet, dass es zumindest einen Anteil von 15 bis 80 Gew.-% an Schwefel bezogen auf die Gesamtmasse aufweist. Der Schwefelanteil des Schwefel-Kohlenstoffaerogel-Komposits aus dem erfindungsgemäßen Verfahren kann dadurch gesteuert werden, dass man entsprechend die Schwefelmenge berechnet und dementsprechend einsetzt.

In einer weiteren bevorzugten Ausführungsform kann das erfindungsgemäße Verfahren unter Verwendung eines Vakuum-Coaters, das üblicherweise in der Tierfutterproduktion genutzt wird, durchgeführt werden. Der Vakuum-Coater weist zumindest eine Beschichtungskammer auf, welche im Rahmen der erfindungsgemäßen Verfahrenstemperatur temperaturstabil und beheizbar ist. Innerhalb der Kammer weist der Vakuum-Coater ein Rührwerk bzw. einen Mischer auf, wodurch ein kontinuierlicher Betrieb und eine homogene Verteilung gewährleistet werden können. Außerdem werden unerwünschte Agglomerate vermieden. Der Vakuum-Coater weist auch mindestens einen korrosionsbeständigen Behälter, in dem der elementare Schwefel aufbewahrt wird, und mindestens eine Vakuum-Pumpe auf. Die mindestens eine Vakuumpumpe ist in der Lage den Druck in der Hauptkammer, in der die Infiltration stattfindet, und/oder dem Behälter, in der der elementare Schwefel gelagert wird, erfindungsgemäß herabzusenken. Die Beschichtungskammer ist mit dem korrosionsbeständigen Schwefelreservoir (Behälter) über eine temperaturbeständige und wärmeisolierte Leitung verbunden. Dadurch wird gewährleistet, dass der Schwefel nicht auskristallisiert bzw. sich vor der Infiltration verfestigt. Außerdem kann der Behälter, in dem der Schwefel gelagert wird, ebenfalls beheizbar sein und ist entsprechend in solch einer Ausführungsform temperaturstabil. Der Vakuum-Coater kann auch mindestens eine Flüssigkeitsdosiereinheit, sowie ein Steuerungssystem aufweisen. Falls der Vakuum-Coater eine Flüssigkeitsdosiereinheit zur Dosierung des Schwefels aufweist, so ist dieser ebenfalls temperaturbeständig und wärmeisoliert. Weiterhin kann der Vakuum-Coater ein Entgasungssystem aufweisen, sodass die austretende Luft aus dem Kohlenstoffaerogel abgeführt wird. Dadurch kann das Vakuum in der Kammer stabil gehalten und eine optimale Infiltration gewährleistet werden.

Solch ein Vakuum-Coater wurde bisher nur in der Tierfutterindustrie um flüssige Zusätze wie Fette, Öle, Geschmacksstoffe oder Vitamine auf Trockenfutter effizient aufzutragen. Im Rahmen des erfindungsgemäßen Verfahrens konnte solch ein Vakuum-Coater erstmalig zur Herstellung eines Schwefel-Kohlenstoffaerogel-Komposits genutzt werden.

### Ausführungsbeispiele:

Ausführungsbeispiel 1 (Vakuum-Coating):
   - Etwa 8 L eines mikroporösen Kohlenstoff-Aerogels werden in einem Edelstahl-Mischer unter Vakuum auf 120 °C aufgewärmt. Währenddessen wird der Schwefel (20 bis 80 Gew.-% auf den eingesetzten Kohlenstoff bezogen) in einem Vorratsbehälter aufgeschmolzen. Anschließend wird der aufgeschmolzene Schwefel auf das Kohlenstoff-Material im Mischer aufgesprüht. Das Mischungsverhältnis beträgt dabei 20 bis 80 Gew.-% Schwefel. Nachdem beide Materialien unter Vakuum ausreichend vermischt wurden (etwa 15 bis 20 Minuten), wird der Mischer wieder belüftet und das Material abgekühlt.
Ausführungsbeispiel 2 (Vakuum-Mixing):
   - Etwa 8 L eines Kohlenstoff-Materials werden in dem Mischer gemäß Ausführungsbeispiel 1 auf 120 °C aufgewärmt. Anschließend wird Schwefel in Festform (20 bis 80 Gew.-% auf den eingesetzten Kohlenstoff bezogen) zugegeben. Das Kohlenstoff-Material und Schwefel werden unter Vakuum solange vermischt, bis der Schwefel vollständig aufgeschmolzen wurde. Anschließend wird der Mischer belüftet und das Material abgekühlt.

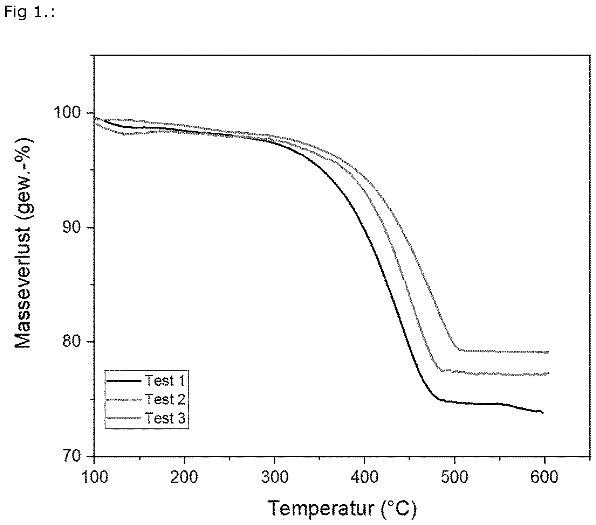

Die Schwefelmenge in einem Schwefel-Kohlenstoffaerogel-Komposit konnte mit Hilfe von thermogravimetrischer Analyse (Fig. 1) untersucht werden. Fig. 1 zeigt, dass die Schwefelmenge bei 20 bis 26 Gew.-% lag. Dabei war der komplette Schwefelanteil, welcher erst bei höheren Temperaturen ab 300 °C frei wird, für die verarbeitete Probe mindestens genauso hoch wie bei den Verfahren des Standes der Technik.

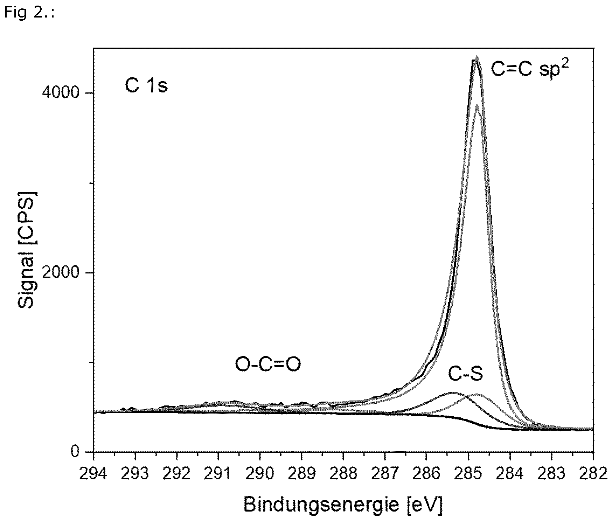

Fig. 2 zeigt die Bindungsverhältnisse zwischen Kohlenstoff und Kohlenstoff innerhalb des Schwefel-Kohlenstoffaerogel-Komposits, welches nach dem erfindungsgemäßen Verfahren erhalten wurde.

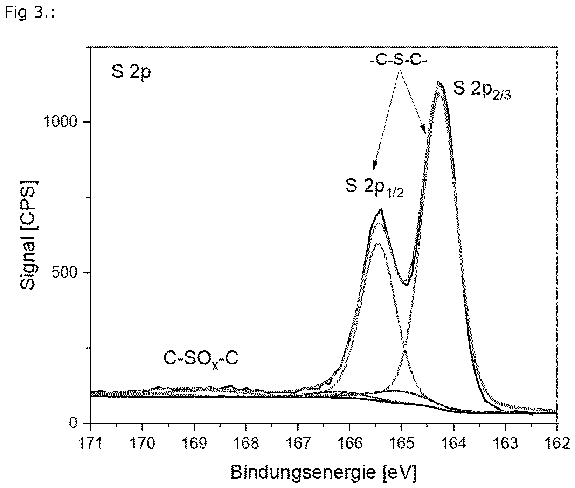

Fig. 3 zeigt die Bindungsverhältnisse zwischen Kohlenstoff und Schwefel innerhalb des Schwefel-Kohlenstoffaerogel-Komposits, welches nach dem erfindungsgemäßen Verfahren erhalten wurde.

## Patentansprüche

1. Verfahren zur Herstellung eines Schwefel-Kohlenstoffaerogel-Komposits mit mindestens einer kovalenten Bindung zwischen Schwefel und amorphen Kohlenstoffaerogel, **dadurch gekennzeichnet, dass**
man elementaren Schwefel und amorphes Kohlenstoffaerogel in einem Reaktor bei gegenüber Umgebungsdruck vermindertem Druck und bei gegenüber Raumtemperatur erhöhter Temperatur miteinander in Kontakt bringt, anschließend belüftet und abkühlt, wobei das in Kontakt bringen im Verlauf von 2 Minuten bis 8 Stunden, insbesondere von 3 Minuten bis 6 Stunden, durchgeführt wird.

2. Verfahren nach Anspruch 1, **dadurch gekennzeichnet, dass** man elementaren Schwefel und das Kohlenstoffaerogel miteinander bei gegenüber Umgebungsdruck vermindertem Druck vermischt und anschließend erhitzt.

3. Verfahren nach Anspruch 1, **dadurch gekennzeichnet, dass** man amorphes Kohlenstoffaerogel und elementaren Schwefel separat voneinander erhitzt und anschließend die beiden Stoffe bei gegenüber Umgebungsdruck vermindertem Druck miteinander in Kontakt bringt und vermischt.

4. Verfahren nach Anspruch 3, **dadurch gekennzeichnet, dass** man amorphes Kohlenstoffaerogel bei gegenüber Umgebungsdruck verminderten Druck erhitzt oder nach dem Erhitzen den Druck gegenüber Umgebungsdruck absenkt.

5. Verfahren nach mindestens einem der Ansprüche 1 bis 4, **dadurch gekennzeichnet, dass** man das Verfahren bei einer Temperatur und einem Druck durchführt, bei der der elementare Schwefel flüssig oder gasförmig, insbesondere flüssig vorliegt.

6. Verfahren nach mindestens einem der Ansprüche 1 bis 5 **dadurch gekennzeichnet, dass** es der gegenüber Umgebungsdruck verminderte Druck 400 mbar oder weniger, insbesondere 100 mbar bis 200 mbar, beträgt.

7. Verfahren nach mindestens einem der Ansprüche 1 bis 6 **dadurch gekennzeichnet, dass** das Verfahren mindestens bei der Schmelztemperatur von Schwefel, vorzugsweise von 109 °C oder mehr, insbesondere von 120 °C bis 170 °C, durchgeführt wird.

8. Verfahren nach mindestens einem der Ansprüche 1 bis 7 **dadurch gekennzeichnet, dass** das amorphe Kohlenstoffaerogel makro-, meso- und/oder mikroporig, insbesondere mikroporös ist.

9. Verfahren nach mindestens einem der Ansprüche 1 bis 8 **dadurch gekennzeichnet, dass** es quasi-kontinuierlich durchgeführt wird.

10. Schwefel-Kohlenstoffaerogel-Komposit, erhältlich nach einem Verfahren nach mindestens einem der Ansprüche 1 bis 9, **dadurch gekennzeichnet, dass** mindestens eine kovalente Bindung eine Einfachbindung zwischen Kohlenstoff und Schwefel ist.

11. Schwefel-Kohlenstoffaerogel-Komposit nach Anspruch 10, **dadurch gekennzeichnet, dass** der Schwefelanteil von 15 bis 80 Gew.-% bezogen auf die Gesamtmasse beträgt.

12. Verwendung eines Vakuum-Coaters aus der Tierfutterindustrie zur Durchführung eines Verfahrens nach mindestens einem der Ansprüche 1 bis 9.
